# EUROPÄISCHE PATENTANMELDUNG

(11) **EP 4 810 411 A1**
(43) Veröffentlichungstag der Anmeldung: **23.09.2026**
(21) Anmeldenummer: 26155280.6
(22) Anmeldetag: 30.01.2026
(51) Int. Cl.: B65G 43/08, B65G 47/71, B67C 3/00, B65G 47/31, G05B 13/02

(54) **EINTEILUNGSMASCHINE UND VERFAHREN ZUM EINTEILEN VON BEHÄLTERN**

(30) Priorität: 19.03.2025 DE 102025110637
(71) Anmelder: Krones AG, 93073 Neutraubling (DE)
(72) Erfinder: Hansen, Denny, 93073 Neutraubling (DE); Clausen, Niels, 93073 Neutraubling (DE); Siegmund, Michael, 93073 Neutraubling (DE); Reckeweg, Marco, 93073 Neutraubling (DE)
(74) Vertreter: Grünecker Patent- und Rechtsanwälte PartG mbB

(57) **Zusammenfassung**

Einteilungsmaschine (1) zum Einteilen von Behältern (2), wie Flaschen, in Gassen (3), die Einteilungsmaschine (1) umfassend wenigstens zwei Gassen (3), eine Transporteinrichtung (4) stromauf der Gassen (3), eine Steuereinheit (5) und wenigstens einen Sensor (6, 6'), wobei der wenigstens eine Sensor (6, 6') ausgebildet ist, in wenigstens einem Teilbereich (11, 12) der Gassen (3) und/oder einem Teilbereich (11', 12') der Transporteinrichtung (4) den Behälterdurchsatz zu bestimmen, und wobei die Steuereinheit (5) ausgebildet ist, auf Basis des durch den Sensor (6, 6') bestimmten Behälterdurchsatzes wenigstens einen Betriebsparameter zu bestimmen und die Einteilungsmaschine (1) anhand des wenigstens einen Betriebsparameters zu steuern.

## Beschreibung

Die vorliegende Erfindung betrifft eine Einteilungsmaschine zum Einteilen von Behältern, wie Flaschen, in Gassen gemäß Anspruch 1 sowie ein Verfahren zum Einteilen von Behältern, wie Flaschen, in Gassen gemäß Anspruch 9.

### Stand der Technik

Einteilungsmaschinen zum Einteilen von Behältern in Gassen sind aus dem Stand der Technik grundsätzlich bekannt.

So beschreibt die DE 10 2017 215 478 A1 einen Behälterzulauf für eine Behälterreinigungsmaschine und ein Verfahren zum Zuführen von Behältern in Einschubgassen eines Behälterzulaufs. Der Behälterzulauf umfasst wenigstens ein Zuförderband, ein dazu paralleles und optional gegenläufig bewegbares Transferband, eine Reihe orthogonal daran anschließender Einschubbänder und oberhalb der Einschubbänder angeordnete Behälterführungen, die Einschubgassen für die Behälter voneinander trennen.

Druckschrift EP 4 307 063 A1 betrifft ein Verfahren zum Ermitteln einer Belegungssituation von Behältern in einer Anlage, umfassend ein Verwenden mindestens einer Kamera zur Erfassung der Belegungssituation der Behälter in der Anlage und Erhalten einer erfassten Belegungssituation, ein Analysieren der erfassten Belegungssituation und Erhalten einer analysierten Belegungssituation und ein Regeln der Anlage basierend auf der analysierten Belegungssituation.

Die DE 10 2022 116 944 A1 betrifft ein Verfahren zur automatischen Regelung einer Behältertransportvorrichtung mit einem oder mehreren Transportbändern zum Anpassen einer Behälterdichte von Behältern die auf dem oder den mehreren Transportbändern transportiert werden. Das Verfahren umfasst zu verschiedenen Zeiten jeweils ein Erfassen von Abstandsdaten von Behältern auf dem oder den mehreren Transportändern, ein Übermitteln der Abstandsdaten an eine Steuerungsvorrichtung, ein Verarbeiten der Abstandsdaten zu Steuerungsdaten und eine nichtlineare Regelung von Bandgeschwindigkeiten des oder der mehreren Transportbänder mittels der Steuerungsdaten.

Bei der Überführung von Behältern von einem Zuförderband an Gassen kann es zu unvorhergesehenen Problemen, wie beispielsweise einem Umfallen von Behältern kommen. Dies erschwert den zuverlässigen Betrieb von beispielsweise Behälterbehandlungsmaschinen oder allgemein Einteilungsmaschinen.

### Technische Aufgabe

Ausgehend vom bekannten Stand der Technik liegt der vorliegenden Erfindung daher die Aufgabe zugrunde, einen zuverlässigeren Betrieb einer Einteilungsmaschine für Behälter zu gewährleisten sowie ein zuverlässigeres Verfahren zum Einteilen von Behältern bereitzustellen.

### Lösung

Diese Aufgabe wird erfindungsgemäß durch die Einteilungsmaschine nach Anspruch 1 und das Verfahren nach Anspruch 9 gelöst. Vorteilhafte Weiterbildungen der Erfindung sind in den abhängigen Ansprüchen erfasst.

Die erfindungsgemäße Einteilungsmaschine zum Einteilen von Behältern, wie Flaschen, in Gassen umfasst wenigstens zwei Gassen, eine Transporteinrichtung stromauf der Gassen, eine Steuereinheit und wenigstens einen Sensor, wobei der wenigstens eine Sensor ausgebildet ist, in wenigstens einem Teilbereich der Gassen und/oder einem Teilbereich der Transporteinrichtung den Behälterdurchsatz zu bestimmen, und wobei die Steuereinheit ausgebildet ist, auf Basis des durch den Sensor bestimmten Behälterdurchsatzes wenigstens einen Betriebsparameter zu bestimmen und die Einteilungsmaschine anhand des wenigstens einen Betriebsparameters zu steuern.

Eine Gasse bezeichnet dabei eine Anordnung zum einspurigen Transport von Behältern.

Die Transporteinrichtung stromauf der Gassen kann beispielsweise ein oder mehrere Transportbänder umfassen und ist insbesondere als ungeordneter Massentransporteur ausgebildet.

Die Transporteinrichtung kann so ausgebildet sein, dass sie die Behälter direkt oder indirekt an die Gassen übergeben kann. D.h. zwischen der Transporteinrichtung und den Gassen kann sich noch beispielsweise ein Teil einer Transporteinheit befinden, welche die Behälter durch die Gassen transportiert, oder auch ein Überschub. Diese Bereiche werden als den Gassen zugehörig verstanden.

Der wenigstens eine Sensor kann beispielsweise eine Kamera, eine Lichtschranke oder einen Ultraschallemitter und -sensor umfassen. Bei optischen Sensoren kann die Erkennung dabei im sichtbaren oder nicht sichtbaren Spektrum erfolgen.

Der wenigstens eine Teilbereich der Gassen kann beispielsweise die in Transportrichtung ersten zehn Prozent aller Gassen oder einer Teilmenge der Gassen bezeichnen. Eine Teilmenge der Gassen bezeichnet dabei eine Anzahl Gassen, die kleiner ist als die Gesamtzahl aller Gassen, umfasst jedoch wenigstens eine Gasse. Der Wert von zehn Prozent ist hier nur beispielhaft genannt. Prinzipiell ist jeder Wert größer Null und kleiner bzw. gleich 100 Prozent denkbar, wie etwa 20 Prozent, 40 Prozent oder 100 Prozent. Auch ist die Position des wenigstens einen Teilbereiches nicht auf einen in Transporteinrichtung ersten Abschnitt der Gassen beschränkt. So kann der wenigstens eine Teilbereich auch am Ende der Gassen oder an einer beliebigen Position in der Mitte der Gassen angeordnet sein.

Der wenigstens eine Teilbereich der Transporteinrichtung bezeichnet einen Bereich der Transporteinrichtung, der sich über die gesamte Breite der Transporteinrichtung oder einen Teil der gesamten Breite der Transporteinrichtung, sowie über eine prinzipiell beliebige Strecke in Transportrichtung erstreckt.

Die Steuereinheit kann ausgebildet sein, auf Basis des durch den Sensor bestimmten Behälterdurchsatzes einen Betriebsparameter weiterhin in Abhängigkeit einer Zielgröße zu bestimmen.

Die Zielgröße kann dabei einen Belegungsgrad einer oder mehrerer Gassen umfassen.

Eine Steuerung der Einteilungsmaschine durch die Steuereinheit kann dabei sowohl als klassische Steuerung als auch im Rahmen eines Regelkreises erfolgen. Der Begriff "steuern" ist somit im Rahmen der Erfindung als den Begriff "regeln" umfassend zu verstehen.

Der Einteilungsmaschine kann eine Behälterbehandlungsmaschine zur weiteren Behandlung der Behälter nachgeordnet sein. So können die Gassen beispielsweise eine geordnete Übergabe an einen Einlauf einer nachgeordneten Behälterbehandlungsmaschine, wie beispielsweise einer Behälterreinigungsmaschine oder eines Packers, ermöglichen.

Der wenigstens eine Betriebsparameter betrifft dabei den Betrieb der Transporteinrichtung und/ oder den Transport in einer oder mehreren Gassen.

Bei der Steuereinheit kann es sich insbesondere um einen Computer mit zugeordnetem Prozessor, Speicher und im Speicher gespeicherten Instruktionen handeln.

Das Bestimmen des wenigstens einen Betriebsparameters auf Basis des bestimmten Behälterdurchsatzes erlaubt in einigen Ausführungsformen eine vereinfachte Inbetriebnahme der Einteilungsmaschine, da es beispielsweise nicht notwendig ist, Behältertyp-spezifische Betriebsparameter manuell einzustellen. Des Weiteren kann die Einteilungsmaschine in einigen Ausführungsformen über ihre gesamte Lebensdauer mit optimalen Betriebsparametern, welche beispielsweise von einem Verschleißzustand der Einteilungsmaschine oder aber auch von einem Zustand der Behälter abhängen können, betrieben werden.

Insgesamt ermöglicht die erfindungsgemäße Einteilungsmaschine somit ein zuverlässigeres Einteilen von Behältern in Gassen.

In einer Ausführungsform kann vorgesehen sein, dass der wenigstens eine Betriebsparameter eine oder mehrere Transportgeschwindigkeiten und/oder Transportrichtungen eines Transportbandes, eine Schmiermitteldosierung, eine Position einer Transportbandbegrenzung und/oder eine Position einer Führungseinrichtung umfasst.

Bei einer Transportgeschwindigkeit kann es sich dabei um eine Transportgeschwindigkeit eines Transportbands der Transporteinrichtung stromauf der Gassen oder um eine Transportgeschwindigkeit eines Transportbands zum Behältertransport innerhalb wenigstens einer Gasse handeln. Analog kann es sich bei einer Transportrichtung um eine Transportrichtung eines Transportbands der Transporteinrichtung stromauf der Gassen oder um eine Transportrichtung eines Transportbands zum Behältertransport innerhalb wenigstens einer Gasse handeln.

Die Schmiermitteldosierung bezieht sich dabei auf die Transporteinrichtung, eine Transportbandbegrenzung und/oder eine Führungseinrichtung.

Somit können diverse Betriebsparameter gezielt angepasst werden, was die Zuverlässigkeit des Betriebs der Einteilungsmaschine weiter verbessert.

In einer Ausführungsform kann vorgesehen sein, dass der wenigstens eine Sensor ausgebildet ist, den Behälterdurchsatz in allen Gassen oder in einer Teilmenge der Gassen zu bestimmen.

Zusätzlich oder alternativ kann vorgesehen sein, dass der wenigstens eine Sensor ausgebildet ist, den Behälterdurchsatz auf einer gesamten Breite der Transporteinrichtung oder entlang eines Teils der gesamten Breite der Transporteinrichtung zu bestimmen. Auch dies verbessert die Zuverlässigkeit der Einteilungsmaschine.

In einer Ausführungsform kann vorgesehen sein, dass der wenigstens eine Sensor zwei Sensoren umfasst, wobei ein erster Sensor ausgebildet ist, den Behälterdurchsatz in allen Gassen oder in einer Teilmenge der Gassen zu bestimmen und wobei ein zweiter Sensor ausgebildet ist, den Behälterdurchsatz auf einer gesamten Breite der Transporteinrichtung oder entlang eines Teils der gesamten Breite der Transporteinrichtung zu bestimmen. Auch dies verbessert die Zuverlässigkeit der Einteilungsmaschine.

**In** einer Ausführungsform kann vorgesehen sein, dass die Steuereinheit ausgebildet ist, den Behälterdurchsatz in den Gassen mit dem Behälterdurchsatz in einem Abschnitt der Transporteinrichtung stromauf der Gassen zu vergleichen und basierend darauf die Einteilungsmaschine anhand des wenigstens einen Betriebsparameters so zu steuern, dass eine Reduzierung eines Staudrucks bewirkt wird. Der reduzierte Staudruck im Behälterstrom führt zu weniger Beschädigungen an Behältern. Dies verbessert die Zuverlässigkeit des Betriebs der Einteilungsmaschine.

**In** einer Ausführungsform kann vorgesehen sein, dass die Steuereinheit ausgebildet ist, einen ungewollten Zustand, wie eine Verblockung oder eine Unterbelegung von einer oder mehreren Gassen, zu erkennen und auf Basis des erkannten ungewollten Zustands wenigstens einen Betriebsparameter zu bestimmen und die Einteilungsmaschine anhand des wenigstens einen Betriebsparameters zu steuern und/oder eine Maßnahme zur automatischen oder manuellen Behebung des ungewollten Zustands zu veranlassen. Ein ungewollter Zustand bezeichnet hierbei eine Abweichung von einem angedachten Betrieb der Einteilungsmaschine. Auch dies verbessert die Zuverlässigkeit des Betriebs der Einteilungsmaschine.

**In** einer Ausführungsform kann vorgesehen sein, dass die Steuereinheit ausgebildet ist, wenigstens eine der Gassen abzusperren und/oder einen Transportstop innerhalb wenigstens einer Gasse zu bewirken. Hiermit kann ein fehlerhafter Weiterbetrieb der Einteilungsmaschine verhindert werden, was ebenfalls die Zuverlässigkeit erhöht.

In einer Ausführungsform kann vorgesehen sein, dass die Steuereinheit ausgebildet ist, anhand eines Simulationsmodells oder eines selbst lernenden Systems den Behälterfluss vorherzusagen und basierend darauf eine proaktive Steuerung oder Regelung des wenigstens einen Betriebsparameters zu veranlassen.

Ein Simulationsmodell enthält hierbei Informationen über den erwarteten Behälterfluss abhängig von dem wenigstens einen Betriebsparameter und/oder einer Änderung des wenigstens einen Betriebsparameters, zum Beispiel im Rahmen einer Steuerung der Einteilungsmaschine anhand des wenigstens einen Betriebsparameters, sowie gegebenenfalls weiteren Einflussgrößen, wie beispielsweise Reibwerten, einer Art und einem Zustand der Behälter, einer Anzahl aussortierter Behälter oder einem eingehenden Behälterdurchsatz auf der Transporteinrichtung, welcher beispielsweise durch eine vorgeordnete Behälterbehandlungsmaschine bedingt ist.

Ein selbst lernendes System kann beispielsweise, basierend auf bekannten realen Behälterflüssen während eines Betriebs einer Einteilungsmaschine, Informationen über den erwarteten Behälterfluss abhängig von zum Beispiel den oben genannten Parametern liefern. Die realen Behälterflüsse können dabei beispielsweise während eines Betriebs einer identischen oder ähnlichen Einteilungsmaschine erfasst und gespeichert werden. Auch denkbar ist es, eine Kalibrierungsphase mit der tatsächlichen Einteilungsmaschine selbst durchzuführen, um Aufzeichnungen der realen Behälterflüsse, auf denen das selbst lernende System basiert, zu erhalten.

Diese Ausführungsform erlaubt eine zuverlässigere Steuerung der Einteilungsmaschine.

Im erfindungsgemäßen Verfahren zum Einteilen von Behältern, wie Flaschen, in Gassen mittels einer Einteilungsmaschine, wird in wenigstens einem Teilbereich der Gassen und/oder einem Teilbereich einer Transporteinrichtung stromauf der Gassen der Behälterdurchsatz bestimmt, und auf Basis des bestimmten Behälterdurchsatzes wenigstens ein Betriebsparameter bestimmt und die Einteilungsmaschine anhand des wenigstens einen Betriebsparameters gesteuert. Dies erlaubt ein zuverlässiges Einteilen von Behältern in Gassen.

In einer Ausführungsform kann vorgesehen sein, dass der wenigstens eine Betriebsparameter eine oder mehrere Transportgeschwindigkeiten und/oder Transportrichtungen von Transportbändern der Transporteinrichtung, eine Schmiermitteldosierung und/oder eine Position einer Transportbandbegrenzung umfasst. Dies erlaubt ein gezieltes Anpassen diverser Betriebsparameter und kann die Zuverlässigkeit des Einteilens von Behältern in Gassen somit weiter verbessern.

In einer Ausführungsform kann vorgesehen sein, dass der Behälterdurchsatz in allen Gassen oder in einer Teilmenge der Gassen bestimmt wird und/oder dass der Behälterdurchsatz auf einer gesamten Breite der Transporteinrichtung oder entlang eines Teils der gesamten Breite der Transporteinrichtung bestimmt wird. Auch dies erlaubt ein zuverlässigeres Einteilen von Behältern in Gassen.

In einer Ausführungsform kann vorgesehen sein, dass der Behälterdurchsatz in den Gassen mit dem Behälterdurchsatz in einem Abschnitt der Transporteinrichtung stromauf der Gassen verglichen wird und basierend darauf die Einteilungsmaschine anhand des wenigstens einen Betriebsparameters so gesteuert wird, dass eine Reduzierung des Staudrucks bewirkt wird. Da bei einem geringeren Staudruck weniger Behälter beschädigt werden, erlaubt auch dies ein zuverlässigeres Einteilen von Behältern in Gassen.

In einer Ausführungsform kann vorgesehen sein, dass ein ungewollter Zustand wie eine Verblockung oder eine Unterbelegung von einer oder mehreren Gassen erkannt wird und auf Basis des erkannten ungewollten Zustands wenigstens ein Betriebsparameter bestimmt wird und die Einteilungsmaschine anhand des wenigstens einen Betriebsparameters gesteuert und/oder eine Maßnahme zur automatischen oder manuellen Behebung des ungewollten Zustands veranlasst wird. Auch dies erlaubt ein zuverlässigeres Einteilen von Behältern in Gassen.

In einer Weiterbildung dieser Ausführungsform kann vorgesehen sein, dass im Fall einer erkannten Verblockung wenigstens eine Gasse abgesperrt und/oder ein Transportstop innerhalb wenigstens einer Gasse bewirkt wird. Hiermit kann ein fehlerhafter Weiterbetrieb der Einteilungsmaschine verhindert werden, was die Zuverlässigkeit weiter verbessert.

In einer Ausführungsform kann vorgesehen sein, dass anhand eines Simulationsmodells oder eines selbst lernenden Systems der Behälterfluss vorhersagt wird und basierend darauf eine proaktive Steuerung oder Regelung des wenigstens einen Betriebsparameters veranlasst wird. Auch dies erlaubt ein zuverlässigeres Einteilen von Behältern in Gassen.

### Kurze Beschreibung der Figuren

- Fig. 1: Schematische Darstellung einer Ausführungsform einer erfindungsgemäßen Einteilungsmaschine
- Fig. 2: Fließdiagramm des erfindungsgemäßen Verfahrens

### Ausführliche Beschreibung

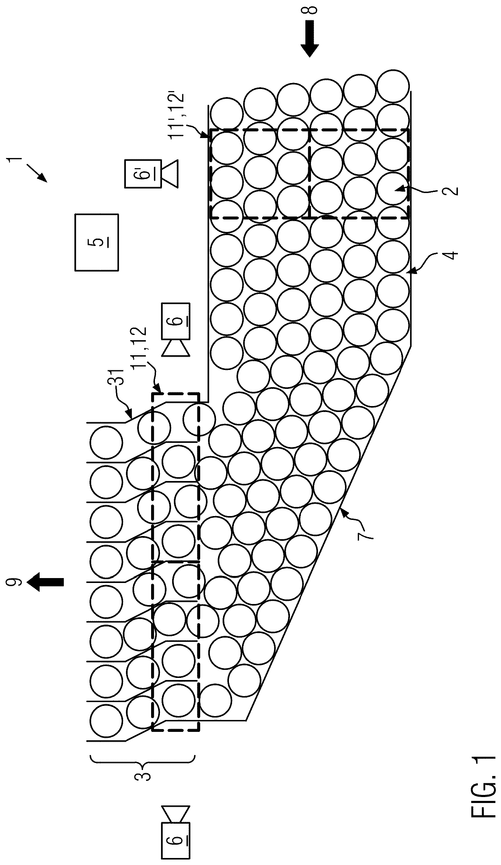

Fig. 1 zeigt eine schematische Darstellung einer erfindungsgemäßen Einteilungsmaschine 1 zum Einteilen von Behältern 2, wie Flaschen, in Gassen 3. Diese umfasst wenigstens zwei Gassen 3, eine Transporteinrichtung 4 stromauf (in Transportrichtung der Behälter 2) der Gassen 3, eine Steuereinheit 5 und wenigstens einen Sensor 6, 6'. Stromabwärts der Gassen 3 kann sich eine nicht gezeigte weitere Transporteinrichtung befinden, welche die Behälter 2 zu einer oder in eine nachfolgende Behälterbehandlungsvorrichtung fördert.

Der Einteilungsmaschine 1 kann eine Behälterbehandlungsmaschine zur weiteren Behandlung der Behälter 2 nachgeordnet sein. So können die Gassen 3 beispielsweise eine geordnete Übergabe der Behälter 2 an einen Einlauf einer nachgeordneten Behälterbehandlungsmaschine, wie beispielsweise einer Behälterreinigungsmaschine oder eines Packers, ermöglichen.

Bei den Behältern 2 kann es sich insbesondere um Flaschen oder Dosen handeln. Die Erfindung ist jedoch hinsichtlich der Behälterart nicht beschränkt.

Eine Gasse 3 bezeichnet eine Anordnung zum einspurigen Transport von Behältern 2. Dazu können die Behälter 2 innerhalb einer Gasse 3 an zwei Seiten von Führungseinrichtungen 31 begrenzt werden. Der Transport der Behälter 2 innerhalb einer Gasse 3 kann dabei beispielsweise durch ein Transportband oder durch einen durch nachfolgende Behälter 2 übertragenen Schub erfolgen. In letzterem Fall kann die jeweilige Gasse beispielsweise eine Gleitfläche aus Edelstahl oder ähnlichem umfassen, auf der die Behälter 2 entlang geschoben werden können.

Die Transporteinrichtung 4 stromauf der Gassen 3 kann beispielsweise ein oder mehrere Transportbänder umfassen und ist insbesondere als ungeordneter Massentransporteur ausgebildet. Dabei kann vorgesehen sein, dass beispielsweise die Transportgeschwindigkeit und/oder die Transportrichtung eines Transportbandes der Transporteinrichtung 4 von etwaigen anderen Transportbändern gesondert (insbesondere unabhängig) eingestellt werden kann. Optional kann weiterhin vorgesehen sein, dass die Transporteinrichtung 4 wenigstens eine Transportbandbegrenzung 7 umfasst, die einen Bereich der Transporteinrichtung 4, innerhalb dessen Behälter 2 transportiert werden, begrenzt. Dabei kann es sich beispielsweise um ein Führungsgeländer handeln, das auf zumindest einer, bevorzugt auf beiden Seiten (links und rechts gesehen in Transportrichtung der Behälter 2 in der Transporteinrichtung 4 beispielsweise) beweglich oder unbeweglich angeordnet ist. Die Transportbandbegrenzung 7 kann starr aber auch zumindest teilweise oder abschnittsweise beweglich ausgeführt sein und kann beispielsweise eine verfügbare Breite der Transporteinrichtung 4 zum Transport der Behälter 2 definieren.

Es kann vorgesehen sein, dass die Transporteinrichtung 4 wenigstens zwei parallele Transportbänder umfasst. Auch denkbar ist, dass die Transporteinrichtung 4 wenigstens zwei aneinandergereihte Transportbänder umfasst. Weiterhin ist es denkbar, dass die Transporteinrichtung 4 wenigstens zwei parallele Transportbänder im Anschluss an wenigstens zwei weitere parallele Transportbänder umfasst. Es ist ebenfalls denkbar, dass die Transporteinrichtung 4 wenigstens einen starren Überschub umfasst.

Die Steuereinheit 5 ist ausgebildet, auf Basis des durch den Sensor 6, 6' bestimmten Behälterdurchsatzes wenigstens einen Betriebsparameter zu bestimmen und die Einteilungsmaschine 1 anhand des wenigstens einen Betriebsparameters zu steuern.

Bei der Steuereinheit 5 kann es sich insbesondere um einen Computer mit zugeordnetem Prozessor, Speicher und im Speicher gespeicherten Instruktionen handeln.

Optional kann dabei vorgesehen sein, dass der wenigstens eine Betriebsparameter eine oder mehrere Transportgeschwindigkeiten und/oder Transportrichtungen eines Transportbandes, eine Schmiermitteldosierung, eine Position einer Transportbandbegrenzung 7 und/oder eine Position einer Führungseinrichtung 31 umfasst. Die Positionen können durch nicht dargestellte Aktuatoren dynamisch angesteuert werden.

Es ist denkbar, eine Position einer Transportbandbegrenzung 7 und/oder eine Position einer Führungseinrichtung 31 beispielsweise durch Verändern des Abstands zu einer Transportbandmitte und/oder durch eine Rotation, beispielsweise um eine Achse senkrecht zu einer Fläche eines Transportbandes, zu verändern. Eine Transportbandbegrenzung 7 begrenzt dabei wie oben beschrieben einen Bereich der Transporteinrichtung 4 stromauf der Gassen 3, innerhalb dessen Behälter 2 transportiert werden. Eine Führungseinrichtung 31 begrenzt einen Bereich innerhalb einer Gasse 3 wie oben beschrieben. Eine Position einer Transportbandbegrenzung 7 und/oder einer Führungseinrichtung 31 kann dabei beispielsweise elektrisch, pneumatisch oder nach anderem Wirkprinzip einstellbar sein. Dies kann beispielsweise mittels eines steuerbaren Servoantriebs geschehen, wobei eine Transportbandbegrenzung 7 beispielsweise auf Schienen senkrecht zur Transportrichtung der Behälter 2 angebracht sein kann und durch Ansteuern des Servoantriebs oder Servomotors entlang der Schiene bewegt werden kann. Es kann alternativ auch vorgesehen sein, dass die Transportbandbegrenzung 7 mehrere unabhängig voneinander bewegbare Begrenzungssegmente umfasst, die jeweils, wie beschrieben, beweglich angeordnet sein können um eine Breite der Transporteinrichtung 4, über die Behälter 2 transportiert werden können, flexibel einzustellen.

Weiterhin ist es denkbar, dass eine Transportbandbegrenzung 7 und/oder eine Führungseinrichtung 31 verformbar ist. Ein Verformen kann dabei beispielsweise auftreten, wenn ein Behälter 2 gegen eine Transportbandbegrenzung 7 oder eine Führungseinrichtung 31 drückt. Dazu kann eine Transportbandbegrenzung 7 und/oder eine Führungseinrichtung 31 fest, schwimmend oder federnd gelagert sein und/oder aus einem flexiblen Material bestehen oder ein solches umfassen.

Zur Steuerung der Einteilungsmaschine 1 kann die Steuereinheit 5 beispielsweise basierend auf dem durch den wenigstens einen Sensor 6, 6' bestimmten Behälterdurchsatz sowie einem Zielbehälterdurchsatz wenigstens einen Betriebsparameter bestimmen und die Einteilungsmaschine 1 anhand des wenigstens einen Betriebsparameters steuern.

So kann beispielsweise bei einem zu niedrigen Behälterdurchsatz eine Transportgeschwindigkeit der Transporteinrichtung 4 erhöht werden. Dadurch kann beispielsweise eine Lückenbildung im Behälterstrom, zum Beispiel innerhalb der Gassen 3, vermieden werden. Im Falle wenigstens zweier paralleler Transportbänder kann zum Beispiel entsprechend ein Mittelwert der Transportgeschwindigkeiten erhöht werden. Dies kann beispielsweise umfassen, dass die Transportgeschwindigkeit aller Transportbänder um den gleichen absoluten oder relativen Wert verändert wird, um einen neuen gewünschten Mittelwert der Transportgeschwindigkeit einzustellen. Im Falle mehrerer Transportbänder ist es jedoch auch denkbar, dass die jeweiligen Transportgeschwindigkeiten um verschiedene Werte so verändert werden, dass die mittlere Transportgeschwindigkeit den gewünschten Wert annimmt. So ist es beispielsweise denkbar, dass die Transportgeschwindigkeit des in Transportrichtung ganz links liegenden Transportbandes stärker erhöht (bzw. verringert) wird als die Transportgeschwindigkeit des oder der übrigen Transportbänder, welche entsprechend weniger stark erhöht (bzw. verringert) wird.

Es ist auch denkbar, dass zusätzlich oder alternativ ein Verkleinern eines Transportbereichs, zum Beispiel durch ein Verändern einer Position einer Transportbandbegrenzung 7 wie oben beschrieben, bewirkt wird. Somit kann eine Lückenbildung vermieden werden, ohne dass eine Anpassung des Behälterdurchsatzes zwingend notwendig ist.

Ein Verringern einer Transportgeschwindigkeit und/oder ein Vergrößern eines Transportbereichs sind ebenfalls denkbar. Somit kann beispielsweise ein Staudruck im Behälterstrom reduziert werden.

Die Einteilungsmaschine 1 kann somit auch als Puffer fungieren. Tritt beispielsweise in einer der Einteilungsmaschine 1 nachgeordneten Behälterbehandlungsmaschine ein Defekt auf, oder ist wenigstens eine Gasse 3 verblockt (zum Beispiel durch einen umgefallenen Behälter), sodass nur ein geringerer ausgehender Behälterdurchsatz 9 möglich ist, kann beispielsweise eine Transportgeschwindigkeit der Transporteinrichtung 4 stromauf der Gassen 3 reduziert werden und/oder eine Position einer Transportbandbegrenzung 7 derart verändert werden, dass ein Transportbereich vergrößert und somit ein Überschuss an eingehenden Behältern 2 im Transportbereich gespeichert werden kann. Es ist auch denkbar, dass im Falle einer schnell behebbaren Störung, wie beispielsweise einer Verblockung einer Gasse durch einen umgefallenen Behälter, der umgehend (wie weiter unten beschrieben) aus der Gasse entfernt wird, keine Anpassung des wenigstens einen Betriebsparameters durchgeführt wird. Dies kann beispielsweise dadurch ermöglich werden, dass bei Normalbetrieb der Einteilungsmaschine 1 ein geringer Staudruck vorgesehen ist, sodass sich bei einer kurzzeitigen Verblockung einer Gasse der Staudruck vorübergehend erhöhen kann, ohne dass es zu Beschädigungen der Behälter 2 oder der Einteilungsmaschine 1 kommt. Auch eine verformbare Transportbandbegrenzung 7 wie oben beschrieben kann hierzu vorteilhaft sein. Insoweit kann erfindungsgemäß also vorgesehen sein, dass eine Anpassung oder ein Einstellen beispielsweise einer Transportgeschwindigkeit der Behälter 2 in der Transporteinrichtung 4 nur dann erfolgt, wenn eine Zeitspanne, über die beispielsweise eine teilweise Reduktion des Abtransports und damit des Durchsatzes der Behälter 2 durch die Gassen 3 durch eine Blockade der Gassen 3 oder ähnliche Störung andauert, einen Grenzwert (beispielsweise 30s oder 1min oder 2min) überschreitet, unterhalb dieses Grenzwertes eine Störung aber durch Erhöhung des Staudrucks (dieser kann ebenfalls als Betriebsparameter angesehen werden) kompensiert wird.

Umgekehrt ist es auch denkbar, dass, falls zum Beispiel ein geringerer eingehender Behälterdurchsatz 8 auftritt (beispielsweise durch einen Defekt an einer stromauf der Einteilungsmaschine 1 gelegenen Behälterbehandlungsmaschine), eine Position einer Transportbandbegrenzung 7 so angepasst wird, dass ein Transportbereich verkleinert wird. Dies verhindert ein zu starkes Abfallen des Staudrucks infolge einer reduzierten eingehenden Behältermenge. Somit kann eine Lückenbildung sowie ein Umfallen der Behälter 2 im Behälterstrom verhindert werden.

Weiterhin kann zusätzlich oder alternativ eine Transportgeschwindigkeit der Transporteinrichtung 4 derart angepasst werden, dass ein Umfallen von Behältern 2 vermieden wird. So kann beispielsweise eine kontinuierliche Reduktion einer Transportgeschwindigkeit bewirkt werden. Auch denkbar ist zusätzlich oder alternativ beispielsweise ein Absperren wenigstens einer Gasse 3 wie weiter unten beschrieben, um die Einteilungsmaschine 1 und gegebenenfalls eine weitere stromab liegende Einrichtung mit geringerem Behälterdurchsatz weiter zu betreiben.

Die Steuereinheit 5 kann ausgebildet sein, auf Basis des durch den Sensor 6, 6' bestimmten Behälterdurchsatzes einen Betriebsparameter weiterhin in Abhängigkeit einer Zielgröße zu bestimmen. Dazu kann im Rahmen eines Optimierungsprozesses ein nach wenigstens einer Zielgröße optimierter Betriebsparameter bestimmt werden.

Die Zielgröße kann dabei einen Belegungsgrad einer oder mehrerer Gassen 3 umfassen. Es ist denkbar, dass sich im Falle mehrerer Gassen 3 der Zielbelegungsgrad einer Gasse vom Zielbelegungsgrad einer zweiten Gasse unterscheidet.

So kann etwa vorgesehen sein, dass im Rahmen des Optimierungsprozesses ein Algorithmus verwendet wird, wonach ein möglichst hoher Belegungsgrad möglichst aller Gassen belohnt wird. Dies kann beispielsweise durch maschinelles Lernen mit einer *Reward Function,* wie aus dem Gebiet des *Reinforcement Learning* bekannt, umgesetzt werden.

Es kann vorgesehen sein, dass der Optimierungsprozess wenigstens eine notwendige Bedingung umfasst. Eine notwendige Bedingung kann beispielsweise einen kontinuierlichen Behältertransport unmittelbar stromauf der Gassen 3 umfassen. Insbesondere kann als notwendige Bedingung gefordert werden, dass der über eine Zeitspanne gemittelte Behälterdurchsatz bzw. die gemittelte zeitliche Ableitung der einen Transportabschnitt passierenden Anzahl Behälter 2 an verschiedenen Transportabschnitten, beispielsweise auf der Transporteinrichtung 4 sowie am Eingang der Gassen 3, gleich bleibt, sodass die entsprechende Kontinuitätsgleichung erfüllt ist. Diese kann beispielsweise durch *Ṁᵢₙ - Ṁₒᵤₜ - Ṁ_{Fehler}* = 0 ausgedrückt werden, wobei *Ṁᵢₙ* den eingehenden Behälterdurchsatz 8 und *Ṁₒᵤₜ* den ausgehenden Behälterdurchsatz 9 bezeichnet. Optional können dabei eventuell aussortierte Behälter (weiter unten beschrieben) durch eine Rate *Ṁ_{Fehler}* aussortierter Behälter berücksichtigt werden. Wenn keine Behälter aussortiert werden, ist diese Rate entsprechend Null und die Kontinuitätsgleichung vereinfacht sich zu *Ṁᵢₙ - Ṁₒᵤₜ* = 0. Anhand dieser Bedingungen können die Betriebsparameter, die *Mᵢₙ* beeinflussen, so gesteuert werden, dass die Kontinuitätsgleichung erfüllt ist, ggf. abhängig davon ob Behälter aussortiert werden oder nicht.

Es ist denkbar, dass die Steuereinheit 5 ausgebildet ist, den wenigstens einen Betriebsparameter auf Basis des durch den Sensor 6, 6' bestimmten Behälterdurchsatzes sowie weiteren Einflussgrößen wie beispielsweise Reibwerten, einer Art und einem Zustand der Behälter 2, einer Anzahl aussortierter Behälter oder einem eingehenden Behälterdurchsatz 8 auf der Transporteinrichtung 4, welcher beispielsweise durch eine vorgeordnete Behälterbehandlungsmaschine bedingt sein kann, zu bestimmen.

Die Art der Behälter 2 beschreibt beispielsweise das Behältermaterial und/oder die Größe, Form und/oder Beschaffenheit der Behälter 2. Die Beschaffenheit der Behälter 2 kann zum Beispiel die Rauheit der Behälteroberfläche umfassen.

Der Zustand der Behälter 2 beschreibt beispielsweise einen Füllgrad der Behälter 2 und/oder ob die Behälter 2 recycelt wurden.

Der wenigstens eine Sensor 6, 6' kann beispielsweise eine Kamera, eine Lichtschranke oder einen Ultraschallemitter und -sensor umfassen. Bei optischen Sensoren 6, 6' kann die Erkennung dabei im sichtbaren oder nicht sichtbaren Spektrum erfolgen.

Der wenigstens eine Sensor 6, 6' ist ausgebildet, in wenigstens einem Teilbereich 11, 12 der Gassen 3 und/oder einem Teilbereich 11', 12' der Transporteinrichtung 4 den Behälterdurchsatz zu bestimmen.

So kann der wenigstens eine Sensor 6, 6' beispielsweise ausgebildet sein, die Behälter 2 im Teilbereich 11, 12 bzw. 11', 12' zu zählen sowie ihre Position zu verfolgen, um den Behälterdurchsatz zu bestimmen. Dazu können beispielsweise die einen Teilbereich 11, 12, 11', 12' verlassenden Behälter 2 über eine Zeitspanne gezählt und über die Zeit gemittelt werden. Die Zeitspanne, über die Behälter gezählt werden, kann dabei sehr kurz gewählt werden. So ist es beispielsweise denkbar, dass die Behälter 2 in jedem Frame einer Kameraaufnahme gesondert gezählt werden. Ein Behälter kann dabei als den Teilbereich verlassend betrachtet werden, wenn seine geometrische Mitte den Teilbereich verlässt. Auch denkbar ist analog ein Zählen der Behälter, welche in einen Teilbereich 11, 12, 11', 12' eintreten, oder welche eine Ebene senkrecht zur Transportrichtung der Behälter 2 innerhalb des Teilbereiches 11, 12,11', 12' passieren.

Optional kann vorgesehen sein, dass der wenigstens eine Sensor 6 ausgebildet ist, den Behälterdurchsatz in allen Gassen 3 oder in einer Teilmenge der Gassen 3 zu bestimmen.

So kann zum Beispiel vorgesehen sein, dass der Behälterdurchsatz in den Bereichen 11 und/oder 12 bzw. in den den Bereichen 11 und/oder 12 entsprechenden Gassen 3 bestimmt wird. Auch wenn der Behälterdurchsatz nicht in allen Gassen 3 bestimmt wird, so kann dennoch anhand des bestimmten Behälterdurchsatzes in einer Teilmenge der Gassen 3 auf den gesamten Behälterdurchsatz in den Gassen 3 rückgeschlossen werden.

So kann beispielsweise angenommen werden, dass sich die Behälter 2 gleichmäßig auf die Gassen 3 verteilen. Alternativ kann zum Beispiel angenommen werden, dass der Behälterdurchsatz prozessbedingt von links nach rechts auf bestimmte Weise abnimmt, sodass die aus einer Richtung gesehen am linken Rand liegende Gasse den höchsten Behälterdurchsatz aufweist und die am rechten Rand liegende Gasse den geringsten, und dass der Behälterdurchsatz über die dazwischen liegenden Gassen abnimmt. Auch denkbar ist analog eine Zunahme von links nach rechts, oder dass der Behälterdurchsatz in den innen liegenden Gassen höher ist und zum Rand hin abnimmt. Prinzipiell können jedoch beliebige Relationen zwischen Behälterdurchsätzen in verschiedenen Gassen 3 modelliert werden. Insbesondere können hier Beobachtungen aus dem realen Betrieb der Einteilungsmaschine 1 verwendet werden.

Zusätzlich oder alternativ kann vorgesehen sein, dass der wenigstens eine Sensor 6' ausgebildet ist, den Behälterdurchsatz auf einer gesamten Breite der Transporteinrichtung 4 oder entlang eines Teils 11', 12' der gesamten Breite der Transporteinrichtung 4 zu bestimmen.

Beispielsweise kann der Behälterdurchsatz in den Bereichen 11' und/oder 12' bestimmt werden. Auch wenn der Behälterdurchsatz nicht auf der gesamten Breite der Transporteinrichtung 4 bestimmt wird, so kann dennoch anhand des bestimmten Behälterdurchsatzes entlang eines Teils der gesamten Breite der Transporteinrichtung 4 auf den gesamten Behälterdurchsatz auf der Transporteinrichtung 4 rückgeschlossen werden.

So kann beispielsweise, ähnlich zum Fall oben, angenommen werden, dass der Behälterdurchsatz auf einer Seite oder in der Mitte höher/niedriger ist als auf der anderen Seite bzw. am Rand, und sich über die dazwischen liegenden Gassen auf bestimmte Weise verändert.

Dies kann zum Beispiel der Fall sein, wenn der Behälterstrom stromauf der Bereiche 11', 12' umgelenkt wird, beispielsweise wenn die Transporteinrichtung 4 eine Krümmung, zum Beispiel um 90°, aufweist.

Ohne Beschränkung der Allgemeinheit kann beispielsweise vorgesehen sein, dass die Transporteinrichtung 4 in Transportrichtung gesehen eine Krümmung nach rechts aufweist. In diesem Beispiel kann weiterhin vorgesehen sein, dass stromab der Krümmung in einem in Transportrichtung rechts liegenden Teil der Gesamtbreite der Transporteinrichtung 4 (beispielsweise in der rechten Hälfte oder im rechten Viertel gemessen an der Gesamtbreite) eine Unterbelegung auftritt. Dies erlaubt eine Reduzierung des Staudrucks. In diesem Fall kann ein Bestimmen des Behälterdurchsatzes in einem übrigen, in Transportrichtung links gelegenen Teil der Gesamtbreite der Transporteinrichtung 4 besonders relevant sein. So kann beispielsweise vorgesehen sein, dass der gesamte Behälterdurchsatz auf der Transporteinrichtung 4 durch den in dem (in Transportrichtung) links gelegenen Teil bestimmten Behälterdurchsatz approximiert wird.

Auch hier kann jedoch prinzipiell ein beliebiges Modell zur Beschreibung des Behälterdurchsatzes gewählt werden.

Optional kann vorgesehen sein, dass die Steuereinheit 5 ausgebildet ist, den Behälterdurchsatz in den Gassen 3 mit dem Behälterdurchsatz in einem Abschnitt der Transporteinrichtung 4 stromauf der Gassen 3 zu vergleichen und basierend darauf die Einteilungsmaschine 1 anhand des wenigstens einen Betriebsparameters so zu steuern, dass eine Reduzierung eines Staudrucks bewirkt wird.

So kann beispielsweise ausgenutzt werden, dass die Anzahl eingehender Behälter 2 auf der Transporteinrichtung 4 stromauf der Gassen 3 - nach einem der Transportgeschwindigkeit entsprechenden Zeitraum - äquivalent zur Summe der ausgehenden Behälter am stromab liegenden Bereich der Gassen 3 plus gegebenenfalls einer Anzahl in diesem Zeitraum aussortierter Behälter sein muss.

**In** anderen Worten muss also der eingehende Behälterdurchsatz 8 auf der Transporteinrichtung 4 nach Abzug etwaiger aussortierter Behälter dem ausgehenden Behälterdurchsatz 9 am stromab liegenden Bereich der Gassen 3 entsprechen, bzw. die Kontinuitätsgleichung erfüllt sein.

Dabei ist es denkbar, dass der eingehende Behälterdurchsatz 8 auf der Transporteinrichtung 4 durch wenigstens einen Sensor 6' bestimmt wird. Auch denkbar ist jedoch, dass der eingehende Behälterdurchsatz 8 anderweitig bekannt ist. So ist es zum Beispiel denkbar, dass der eingehende Behälterdurchsatz 8 der Einteilungsmaschine 1 bzw. der Steuereinheit 5 als Parameter, der beispielsweise durch eine stromauf liegende Einrichtung (ggf. in Abhängigkeit der Transportgeschwindigkeit in der Transporteinrichtung 4), wie eine vorangestellte Behälterbehandlungsmaschine, bekannt ist, übergeben wird.

Weiterhin ist es denkbar, dass der ausgehende Behälterdurchsatz 9 im stromab liegenden Bereich der Gassen 3 beispielsweise durch wenigstens einen Sensor 6 bestimmt wird. Es ist jedoch auch denkbar, dass der ausgehende Behälterdurchsatz 9 durch einen weiteren Sensor bestimmt wird. Der weitere Sensor kann dabei ausgebildet sein, den ausgehenden Behälterdurchsatz 9 in einem stromab liegenden Bereich der Gassen 3 oder in einer stromab der Einteilungsmaschine 1 gelegenen weiteren Einrichtung zu bestimmen.

Bei dem Vergleich der Behälterdurchsätze kann gegebenenfalls, wie oben erwähnt, eine Anzahl aussortierter Behälter berücksichtigt werden. Behälter 2 werden dabei beispielsweise aussortiert, also dem Behälterstrom entnommen, wenn sie Defekte aufweisen, umgefallen sind oder sich überschlagen haben. Es ist denkbar, dass eine Erkennung auszusortierender, also beispielsweise defekter Behälter mithilfe wenigstens eines Sensors 6, 6' erfolgt. Dies hat den Vorteil, dass keine zusätzlichen Sensoren benötigt werden. Es kann jedoch auch vorgesehen sein, dass zur Erkennung auszusortierender Behälter weitere Sensoren verwendet werden, was den Einsatz speziell adaptierter Sensoren erlaubt. Ein Aussortieren auszusortierender Behälter kann automatisch oder manuell erfolgen. So kann ein Aussortieren auszusortierender Behälter beispielsweise durch einen oberhalb der Gassen 3 angebrachten Greifarm erfolgen, welcher ausgebildet ist, einen auszusortierenden Behälter zu greifen, aus dem Behälterstrom zu entfernen und zu entsorgen.

Optional kann vorgesehen sein, dass die Steuereinheit 5 ausgebildet ist, einen ungewollten Zustand, wie eine Verblockung oder eine Unterbelegung von einer oder mehreren Gassen 3 oder ein beliebiger anderer Betriebszustand der Einteilungsmaschine 1, der von einem gewünschten Zustand abweicht, zu erkennen. Neben einer Verblockung oder einer Unterbelegung von Gassen 3 sind auch andere ungewollte Zustände denkbar, wie zum Beispiel ein Vorhandensein eines Fremdkörpers.

Weiterhin kann vorgesehen sein, dass die Steuereinheit 5 ausgebildet ist, auf Basis des erkannten ungewollten Zustands wenigstens einen Betriebsparameter zu bestimmen und die Einteilungsmaschine 1 anhand des wenigstens einen Betriebsparameters zu steuern und/oder eine Maßnahme zur automatischen oder manuellen Behebung des ungewollten Zustands zu veranlassen.

So kann beispielsweise vorgesehen sein, dass die Belegung der Gassen 3 möglichst hoch sein soll. Entsprechend kann bei einer Unterbelegung beispielsweise die Transportgeschwindigkeit eines oder mehrerer Transportbänder der Transporteinrichtung 4 stromauf der Gassen 3 erhöht werden.

Auch denkbar ist beispielsweise eine Änderung einer Position einer Transportbandbegrenzung 7 und/oder einer Führungseinrichtung 31 wie oben beschrieben. Indem diese beispielsweise oszillierend, also zum Beispiel in Einklang mit einem Maschinentakt, verändert werden, können beispielsweise erkannte Verblockungen zum optimalen Zeitpunkt "freigerüttelt" werden. Ein Maschinentakt kann dabei eine Frequenz bezeichnen, mit der beispielsweise eine der Einteilungsmaschine 1 nachgeordnete Behälterbehandlungsmaschine Behälter 2 aus den Gassen 3 übernimmt. Es ist zum Beispiel denkbar, dass die beispielhafte nachgeordnete Behälterbehandlungsmaschine in regelmäßigen Intervallen eine Anzahl Behälter 2, wie beispielsweise fünf Behälter, aus einer Gasse übernimmt. Somit können nachfolgende Behälter 2 in Intervallen nachrücken bzw. in Intervallen innerhalb der Gasse weitertransportiert werden.

Alternativ oder zusätzlich kann vorgesehen sein, dass bei Erkennung eines ungewollten Zustands ein für den ungewollten Zustand und/oder für einen Vorschlag zur Behebung des ungewollten Zustands indikatives Signal an einen Bediener ausgegeben wird, um den erkannten, ungewollten Zustand manuell zu beheben. Dabei kann ein Signal beispielsweise eine Anzeige auf einem Bildschirm oder einen Ton umfassen. Es ist beispielsweise denkbar, dass, falls ein Versuch einer automatischen Behebung, beispielsweise durch eine oszillierende Änderung der Position einer Transportbandbegrenzung 7 und/oder einer Führungseinrichtung 31 wie oben beschrieben, nicht zur erfolgreichen Behebung des ungewollten Zustands geführt hat, eine Anzeige auf einem Bildschirm an einen Bediener ausgegeben wird, der den erkannten ungewollten Zustand infolgedessen manuell behebt.

Optional kann vorgesehen sein, dass die Steuereinheit 5 ausgebildet ist, wenigstens eine der Gassen 3 abzusperren und/oder einen Transportstop innerhalb wenigstens einer Gasse 3 zu bewirken.

So ist es beispielsweise denkbar, eine Gasse abzusperren, wenn innerhalb der Gasse eine Störung, wie eine Verblockung durch einen umgefallenen Behälter, vorliegt. Somit kann ein fehlerhafter Weiterbetrieb der Einteilungsmaschine 1 vermieden werden. Auch denkbar ist beispielsweise, dass aufgrund eines Defekts an einer stromauf der Einteilungsmaschine 1 gelegenen Behälterbehandlungsmaschine ein geringerer eingehender Behälterdurchsatz 8 auftritt. In diesem Fall kann es ebenso vorteilhaft sein, wenigstens eine Gasse abzusperren und/oder einen Transportstop innerhalb der Gasse zu bewirken, um bei gleichbleibendem Staudruck die Einteilungsmaschine 1 mit (vorübergehend) geringerer Effizienz weiter zu betreiben.

Eine Absperrung einer Gasse 3 kann dabei beispielsweise mechanisch durch Einschieben eines Absperrelements, welches den Behälterstrom unterbricht, in den Behälterstrom am Eingang oder innerhalb der Gasse erfolgen. Auch denkbar ist es, dass statt oder zusätzlich zu einer Absperrung einer Gasse 3 ein für den Behältertransport innerhalb der Gasse 3 zuständiges Transportband angehalten wird, um einen Transportstop innerhalb der Gasse 3 zu realisieren. Dies ist insbesondere dann möglich, wenn wie oben beschrieben der Staudruck geringgehalten wird.

Optional kann vorgesehen sein, dass die Steuereinheit 5 ausgebildet ist, anhand eines Simulationsmodells oder eines selbst lernenden Systems den Behälterfluss vorherzusagen und basierend darauf eine proaktive Steuerung oder Regelung des wenigstens einen Betriebsparameters zu veranlassen.

Wie oben beschrieben enthält ein Simulationsmodell bzw. ein selbst lernendes System hierbei bevorzugt Informationen über den erwarteten Behälterfluss abhängig von dem wenigstens einen Betriebsparameter und/oder einer Änderung des wenigstens einen Betriebsparameters sowie gegebenenfalls weiteren Einflussgrößen. Ein selbst lernendes System kann dabei beispielsweise basierend auf realen Behälterflüssen während eines Betriebs einer Einteilungsmaschine 1 trainiert worden sein.

Es kann beispielsweise vorgesehen sein, dass die Steuereinheit 5 den durch den Sensor 6, 6' bestimmten Behälterstrom mit dem von einem Simulationsmodell bzw. einem selbst lernenden System vorhergesagten Behälterstrom vergleicht und basierend darauf den wenigstens einen Betriebsparameter anpasst. Dabei kann es insbesondere vorgesehen sein, dass die Steuereinheit 5 anhand eines Simulationsmodells bzw. eines selbst lernenden Systems vorhersagen kann, wie sich ein Anpassen eines Betriebsparameters auf den Behälterdurchsatz auswirken wird.

Tritt beispielsweise in einer stromauf der Einteilungsmaschine 1 gelegenen Behälterbehandlungsmaschine ein Defekt auf, kann dies zu einem kontinuierlichen Abfall des eingehenden Behälterdurchsatzes 8 in der Transporteinrichtung 4 führen. Dies kann beispielsweise durch Vergleich des durch den wenigstens einen Sensor 6, 6' bestimmten Behälterdurchsatzes mit einem durch das Simulationsmodell bzw. durch das selbst lernende System vorhergesagten Behälterdurchsatz von der Steuereinheit 5 erkannt werden, was eine proaktive Steuerung oder Regelung des wenigstens einen Betriebsparameters ermöglicht. Eine proaktive Steuerung oder Regelung kann dabei beispielsweise umfassen, dass eine sich verändernde Situation, wie ein kontinuierliches Abfallen des eingehenden Behälterdurchsatzes 8, erkannt wird und basierend darauf beispielsweise ein kontinuierliches Verkleinern des Transportbereiches durch Anpassen der Position einer Transportbandbegrenzung 7 bewirkt wird. Die Position einer Transportbandbegrenzung 7 kann dabei insbesondere so angepasst werden, dass eine zu große Abnahme des Staudrucks durch den geringeren eingehenden Behälterdurchsatz 8 verhindert bzw. kompensiert wird, wodurch beispielsweise ein Umfallen der Behälter 2 verhindert werden kann.

Es kann auch vorgesehen sein, dass das Simulationsmodell bzw. das selbst lernende System Informationen über planmäßige Änderungen im Betrieb, wie beispielsweise eine Wartung einer stromauf gelegenen Behälterbehandlungsmaschine oder ein Umstellen auf einen anderen Behältertyp, beinhaltet. Somit kann die Steuereinheit 5 den Betrieb der Einteilungsmaschine 1 proaktiv an solche vorhersehbaren Änderungen, wie beispielsweise einen resultierenden zeitweise verringerten eingehenden Behälterdurchsatz 8, anpassen.

Je nach Komplexität des Simulationsmodells bzw. der im Training des selbst lernenden Systems abgedeckten Situationen erlaubt diese Ausführungsform somit ein zuverlässiges Steuern der Einteilungsmaschine 1 in verschiedensten Situationen.

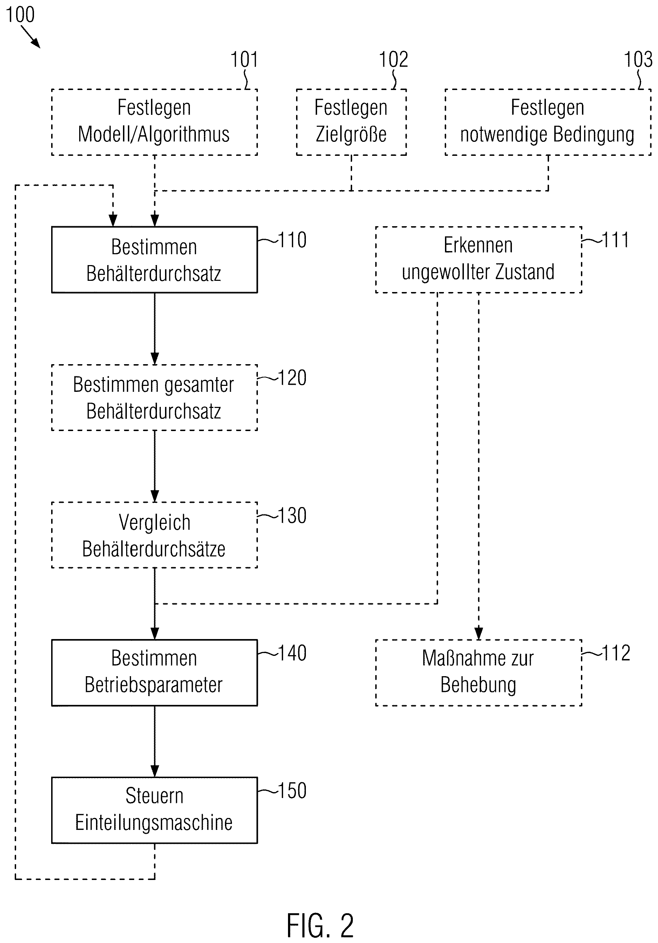

Fig. 2 zeigt ein Fließdiagramm des erfindungsgemäßen Verfahrens 100 zum Einteilen von Behältern 1 in Gassen 3. Das Verfahren 100 kann beispielsweise mit einer Einteilungsmaschine 1 nach Fig. 1 durchgeführt werden, wobei prinzipiell jede Ausführungsform der Einteilungsmaschine 1 nach Fig. 1 zur Durchführung des Verfahrens 100 vorgesehen werden kann. Das Verfahren 100 kann unter Verwendung einer Steuereinheit 5 mit einem in einem Speicher der Steuereinheit 5 gespeicherten Programm durchgeführt werden.

Optional kann vorgesehen sein, dass zunächst in einem Schritt 101 ein Modell oder ein Algorithmus ausgewählt wird, mithilfe dessen basierend auf einem bestimmten (d.h. gemessenen) Behälterdurchsatz wenigstens ein Betriebsparameter der Einteilungsmaschine 1 bestimmt werden kann. Die Auswahl des Modells oder des Algorithmus' kann dabei beispielsweise vom Behältertyp abhängen. So kann beispielsweise vorgesehen sein, dass auf der Steuereinheit 5 verschiedene Modelle oder Algorithmen für verschiedene Behältertypen gespeichert sind. Das passende Modell bzw. der passende Algorithmus kann beispielsweise durch Eingabe eines für den Behältertyp indikativen Parameters ausgewählt werden. Alternativ ist es auch denkbar, dass der Behältertyp automatisch, beispielsweise mithilfe eines Sensors, erkannt und das passende Modell bzw. der passende Algorithmus ausgewählt wird. Weiterhin ist es ebenfalls denkbar, dass das Modell bzw. der Algorithmus für mehrere Behältertypen geeignet ist, sodass keine Auswahl des Modells bzw. des Algorithmus' nötig ist.

In einem einfachen Beispiel kann das Modell bzw. der Algorithmus beinhalten, dass eine Differenz zwischen einem bestimmten (d.h. gemessenen) Behälterdurchsatz und einem Sollwert berechnet wird, und dass eine mittlere Transportgeschwindigkeit als beispielhafter Betriebsparameter entsprechend verändert wird. Ein "entsprechendes Verändern" bezeichnet in diesem einfachen Beispiel, dass bei zu geringem Behälterdurchsatz die mittlere Transportgeschwindigkeit proportional zum Absolutwert dieser Differenz erhöht wird, und bei zu hohem Behälterdurchsatz analog verringert. Ein Verändern der mittleren Transportgeschwindigkeit kann dabei beispielsweise umfassen, dass die Transportgeschwindigkeit aller Transportbänder um den gleichen Wert verändert wird. Im Falle mehrerer Transportbänder ist es jedoch auch denkbar, dass die jeweiligen Transportgeschwindigkeiten um verschiedene Werte so verändert werden, dass die mittlere Transportgeschwindigkeit den gewünschten Wert annimmt. So ist es beispielsweise denkbar, dass die Transportgeschwindigkeit des in Transportrichtung ganz links liegenden Transportbandes stärker erhöht (bzw. verringert) wird als die Transportgeschwindigkeit des oder der übrigen Transportbänder, welche entsprechend weniger stark erhöht (bzw. verringert) wird.

Es sind jedoch auch komplexere Modelle bzw. Algorithmen denkbar. Insbesondere ist es denkbar, dass das Modell bzw. der Algorithmus ein Simulationsmodell oder ein selbst lernendes System wie weiter oben im Zusammenhang mit Fig. 1 beschrieben umfasst.

Optional kann weiterhin in Schritt 102 eine Zielgröße und/oder in Schritt 103 eine notwendige Bedingung ausgewählt werden. Eine Zielgröße kann dabei beispielsweise einen Belegungsgrad wenigstens einer Gasse 3 umfassen. Eine notwendige Bedingung kann beispielsweise umfassen, dass ein Behältertransport unmittelbar stromauf der Gassen 3 kontinuierlich erfolgt. Die optionalen Schritte 101, 102 und 103 können beispielsweise während einer Inbetriebnahme der Einteilungsmaschine 1 durchgeführt werden.

Unabhängig von der Durchführung oder einer in Schritten 101, 102 und/oder 103 getroffenen Wahl wird erfindungsgemäß in einem Schritt 110 in wenigstens einem Teilbereich der Gassen 3 und/oder einem Teilbereich einer Transporteinrichtung 4 stromauf der Gassen 3 der Behälterdurchsatz bestimmt.

Optional kann in einem Schritt 120 aus dem oder den bestimmten Behälterdurchsatz/-sätzen ein gesamter Behälterdurchsatz in den Gassen 3 und/oder auf der gesamten Breite der Transporteinrichtung 4 bestimmt werden. In einem einfachen Beispiel kann dabei angenommen werden, dass die Behälter 2 über die Gassen 3 bzw. die Breite der Transporteinrichtung 4 gleichverteilt sind, sodass der gesamte Behälterdurchsatz *M_{ges}* durch ${M}_{ges} = {M}_{mess} \times \frac{{N}_{ges}}{{N}_{mess}}$ mit bestimmtem Behäl-terdurchsatz *Mₘₑₛₛ*, Gesamtzahl *N_{ges}* Gassen und Anzahl *Nₘₑₛₛ* betrachteter Gassen bzw. durch ${M}_{ges} = {M}_{mess} \times \frac{{B}_{ges}}{{B}_{mess}}$ mit Gesamtbreite *B_{ges}* der Transporteinrichtung und betrachteter Breite *Bₘₑₛₛ* der Transporteinrichtung gegeben ist.

Optional kann in einem Schritt 130 ein Behälterdurchsatz in den Gassen 3 mit einem Behälterdurchsatz in einem Abschnitt der Transporteinrichtung 4 stromauf der Gassen 3 verglichen werden. Dabei kann vorgesehen sein, dass wenigstens ein Behälterdurchsatz gemäß Schritt 110 oder Schritt 120 bestimmt wurde. Es kann jedoch auch vorgesehen sein, dass ein Behälterdurchsatz bereits extern bekannt ist und direkt als Parameter in das Verfahren 100 einfließt.

Optional kann in einem Schritt 111 ein ungewollter Zustand wie eine Verblockung oder eine Unterbelegung von einer oder mehreren Gassen 3 erkannt werden. Falls in Schritt 111 ein ungewollter Zustand erkannt wird, kann optional in einem nächsten Schritt 112 eine Maßnahme zur automatischen oder manuellen Behebung veranlasst werden (siehe hierzu auch die Beschreibung zur Fig. 1). Eine Maßnahme zur automatischen oder manuellen Behebung kann dabei beispielsweise eine Ausgabe eines Signals, wie ebenfalls im Kontext der Fig. 1 beschrieben, an einen Bediener umfassen.

In einem nächsten Schritt 140 wird auf Basis des in Schritt 110 bestimmten Behälterdurchsatzes unter Berücksichtigung eines gegebenenfalls in Schritt 111 erkannten ungewollten Zustands wenigstens ein Betriebsparameter bestimmt. Der in Schritt 110 bestimmte Behälterdurchsatz kann zu diesem Zeitpunkt bereits gemäß Schritt 120 und/oder Schritt 130 verarbeitet worden sein.

In einem nächsten Schritt 150 wird die Einteilungsmaschine 1 anhand des in Schritt 140 bestimmten wenigstens einen Betriebsparameters gesteuert.

Optional kann anschließend an Schritt 150 ein erneutes Bestimmen des Behälterdurchsatzes gemäß Schritt 110 stattfinden. Die Einteilungsmaschine 1 kann somit im Rahmen eines Regelkreises gesteuert (d.h. geregelt) werden.

## Patentansprüche

1. Einteilungsmaschine (1) zum Einteilen von Behältern (2), wie Flaschen, in Gassen (3), die Einteilungsmaschine (1) umfassend wenigstens zwei Gassen (3), eine Transporteinrichtung (4) stromauf der Gassen (3), eine Steuereinheit (5) und wenigstens einen Sensor (6, 6'), wobei der wenigstens eine Sensor (6, 6') ausgebildet ist, in wenigstens einem Teilbereich (11, 12) der Gassen (3) und/oder einem Teilbereich (11', 12') der Transporteinrichtung (4) den Behälterdurchsatz zu bestimmen, und wobei die Steuereinheit (5) ausgebildet ist, auf Basis des durch den wenigstens einen Sensor (6, 6') bestimmten Behälterdurchsatzes wenigstens einen Betriebsparameter zu bestimmen und die Einteilungsmaschine (1) anhand des wenigstens einen Betriebsparameters zu steuern.

2. Einteilungsmaschine (1) nach Anspruch 1, wobei der wenigstens eine Betriebsparameter eine Transportgeschwindigkeit und/oder Transportrichtung eines Transportbandes der Transporteinrichtung (4) oder eines Transportbandes zum Transport von Behältern (2) innerhalb einer Gasse (3), eine Schmiermitteldosierung, eine Position einer Transportbandbegrenzung (7) und/oder eine Position einer Führungseinrichtung (31) umfasst.

3. Einteilungsmaschine (1) nach Anspruch 1 oder 2, wobei der wenigstens eine Sensor (6) ausgebildet ist, den Behälterdurchsatz in allen Gassen (3) oder in einer Teilmenge der Gassen (3) zu bestimmen
und/oder
wobei der wenigstens eine Sensor (6') ausgebildet ist, den Behälterdurchsatz auf einer gesamten Breite der Transporteinrichtung (4) oder entlang eines Teils der gesamten Breite der Transporteinrichtung (4) zu bestimmen.

4. Einteilungsmaschine (1) nach einem der Ansprüche 1 bis 3, wobei der wenigstens eine Sensor (6, 6') zwei Sensoren umfasst, wobei ein erster Sensor (6) ausgebildet ist, den Behälterdurchsatz in allen Gassen (3) oder in einer Teilmenge der Gassen (3) zu bestimmen und wobei ein zweiter Sensor (6') ausgebildet ist, den Behälterdurchsatz auf einer gesamten Breite der Transporteinrichtung (4) oder entlang eines Teils der gesamten Breite der Transporteinrichtung (4) zu bestimmen.

5. Einteilungsmaschine (1) nach einem der Ansprüche 1 bis 4, wobei die Steuereinheit (5) ausgebildet ist, den Behälterdurchsatz in den Gassen (3) mit dem Behälterdurchsatz in einem Abschnitt der Transporteinrichtung (4) stromauf der Gassen (3) zu vergleichen und basierend darauf die Einteilungsmaschine (1) anhand des wenigstens einen Betriebsparameters so zu steuern, dass eine Reduzierung eines Staudrucks bewirkt wird.

6. Einteilungsmaschine (1) nach einem der Ansprüche 1 bis 5, wobei die Steuereinheit (5) ausgebildet ist, einen ungewollten Zustand wie eine Verblockung oder eine Unterbelegung von einer oder mehreren Gassen (3) zu erkennen und auf Basis des erkannten ungewollten Zustands wenigstens einen Betriebsparameter zu bestimmen und die Einteilungsmaschine (1) anhand des wenigstens einen Betriebsparameters zu steuern und/oder eine Maßnahme zur automatischen oder manuellen Behebung des ungewollten Zustands zu veranlassen.

7. Einteilungsmaschine (1) nach einem der Ansprüche 1 bis 6, wobei die Steuereinheit (5) ausgebildet ist, wenigstens eine der Gassen (3) abzusperren und/oder einen Transportstop innerhalb wenigstens einer Gasse zu bewirken.

8. Einteilungsmaschine (1) nach einem der Ansprüche 1 bis 7, wobei die Steuereinheit (5) ausgebildet ist, anhand eines Simulationsmodells oder eines selbst lernenden Systems den Behälterfluss vorherzusagen und basierend darauf eine proaktive Steuerung oder Regelung des wenigstens einen Betriebsparameters zu veranlassen.

9. Verfahren (100) zum Einteilen von Behältern (2), wie Flaschen, in Gassen (3) mittels einer Einteilungsmaschine (1), wobei in wenigstens einem Teilbereich (11, 12) der Gassen (3) und/oder einem Teilbereich (11', 12') einer Transporteinrichtung (4) stromauf der Gassen (3) der Behälterdurchsatz bestimmt wird, und wobei auf Basis des bestimmten Behälterdurchsatzes wenigstens ein Betriebsparameter bestimmt wird und die Einteilungsmaschine (1) anhand des wenigstens einen Betriebsparameters gesteuert wird.

10. Verfahren (100) nach Anspruch 9, wobei der wenigstens eine Betriebsparameter eine oder mehrere Transportgeschwindigkeiten und/oder Transportrichtungen von Transportbändern der Transporteinrichtung (4), eine Schmiermitteldosierung, eine Position einer Transportbandbegrenzung (7) und/oder eine Position einer Führungseinrichtung (31) umfasst.

11. Verfahren (100) nach Anspruch 9 oder 10, wobei der Behälterdurchsatz in allen Gassen (3) oder in einer Teilmenge der Gassen (3) bestimmt wird
und/oder
wobei der Behälterdurchsatz auf einer gesamten Breite der Transporteinrichtung (4) oder entlang eines Teils der gesamten Breite der Transporteinrichtung (4) bestimmt wird.

12. Verfahren (100) nach einem der Ansprüche 9 bis 11, wobei der Behälterdurchsatz in den Gassen (3) mit dem Behälterdurchsatz in einem Abschnitt der Transporteinrichtung (4) stromauf der Gassen (3) verglichen wird, gegebenenfalls unter Berücksichtigung einer Anzahl aussortierter Behälter, und basierend darauf die Einteilungsmaschine (1) anhand des wenigstens einen Betriebsparameters so gesteuert wird, dass eine Reduzierung eines Staudrucks bewirkt wird.

13. Verfahren (100) nach einem der Ansprüche 9 bis 12, wobei ein ungewollter Zustand, wie eine Verblockung oder eine Unterbelegung von einer oder mehreren Gassen (3), erkannt wird und auf Basis des erkannten ungewollten Zustands wenigstens ein Betriebsparameter bestimmt wird und die Einteilungsmaschine (1) anhand des wenigstens einen Betriebsparameters gesteuert und/oder eine Maßnahme zur automatischen oder manuellen Behebung des ungewollten Zustands veranlasst wird.

14. Verfahren (100) nach Anspruch 13, wobei im Fall eines erkannten ungewollten Zustands wenigstens eine Gasse abgesperrt und/oder ein Transportstop innerhalb wenigstens einer Gasse bewirkt wird.

15. Verfahren (100) nach einem der Ansprüche 9 bis 14, wobei anhand eines Simulationsmodells oder eines selbst lernenden Systems der Behälterfluss vorhersagt wird und basierend darauf eine proaktive Steuerung oder Regelung des wenigstens einen Betriebsparameters veranlasst wird.
